# EUROPEAN PATENT SPECIFICATION

(11) **EP 1 826 447 B1**
(45) Date of publication and mention of the grant of the patent: **11.03.2009**
(21) Application number: 07102948.2
(22) Date of filing: 23.02.2007
(51) Int. Cl.: F16D 65/12

(54) **Method and brake disc with composite insert member**
Verfahren und Bremsscheibe mit einem Verbundstoffeinsatz
Procédé et disque de frein avec élément d'insertion composite

(30) Priority: 23.02.2006 US 361938
(43) Date of publication of application: 29.08.2007
(73) Proprietor: Honeywell International Inc., Morristown NJ 07960 (US)
(72) Inventor: Walker, Terence B., South Bend, IN 46619 (US); Johnson, Darrell L., South Bend, IN 46614 (US); Booker, Laurie A., South Bend, IN 46637 (US)
(74) Representative: Haley, Stephen

(56) References cited:
- GB-A- 1 246 158
- US-A- 3 934 686
- US-A- 4 557 356
- US-A- 5 273 140

## Description

This disclosure relates generally to a method and a brake disc with a composite insert member and, more particularly, to a brake disc with a carbon-carbon composite insert member to provide an interface for the brake disc.

The use of carbon-carbon composite brake disc assemblies in aircraft brakes, which have been referred to as carbon brakes, is well known in the aerospace industry, Carbon-carbon composite brake disc assemblies are manufactured by aircraft wheel and brake manufacturers using a variety of manufacturing methods, which generally require lengthy fabrication and densification methods. In recent years, aircraft manufacturers have increasingly specified the use of such carbon-carbon composite brake disc assemblies for brakes designed for use with new aircraft models. Typically, a carbon-carbon composite brake disc of a brake disc assembly has either a plurality of circumferentially spaced-apart slots about the circumference of a central opening, which receive splines of an adjacent torque tube, or a plurality of circumferentially spaced-apart slots about the circumference of the outer diameter of the brake disc, which receive drive keys of an adjacent aircraft wheel. The splines of the torque tube and the drive keys of the wheel are usually made of metal. As is well known in the aircraft wheel and brake industry, the spaced-apart slots of the brake disc may each include a metal insert to provide a metal-to-metal interface between the brake disc and either the spline of the torque tube or the drive key of the wheel. The metal-to-metal interface reduces the wear of the spaced-apart slots in the carbon-carbon composite brake disc, and also reduces chipping of the slots, which can occur as a result of loads exerted on the surfaces of the slots. However, the use of metal inserts may require that holes be drilled into the carbon-carbon composite brake disc so the metal inserts can be riveted to the disc, which increases machining and assembly time, reduces the amount of braking energy that can be absorbed by the brake disc, and results in an increase the cost of manufacturing the brake disc. Additionally, metal inserts add weight to the carbon-carbon composite brake disc. Another example of a prior art device can be found disclosed in US3934686.

In order to solve the problems associated with the prior art, the present invention provides a disc for a friction mechanism, the disc comprises a generally annular member having a central opening, a pair of generally parallel surfaces defining a disc thickness extending radially between an outer axial surface and an inner axial surface at the central opening, and at least one radially extending opening located in one of the axial surfaces, the radially extending opening including a pair of oppositely disposed faces extending radially to a surface located at an end of the radially extending opening, each face having therein at least one of an open area or a projection extending circumferentially relative to the disc and with an axial width less than the disc thickness to be disposed completely internally within the disc thickness, and a carbon-carbon composite insert member adjacent a respective face, the insert member comprising a portion shaped substantially similar to the face and having at least the other of the open area and the projection, the projection encompassed by surfaces of the open area, wherein after insertion of the insert member, the outer axial surface in which the radially extending opening is formed remains substantially exposed and a width of the insert member is substantially equal to a width of the disc.

Each face may extend axially between the generally parallel surfaces and has a thickness equal to the disc thickness.

The open area may be in each face of the opening and the projection may be part of the insert member.

The projection may extend between the outer axial surface and the surface at the end of the radially extending opening.

The projection and open area may have complementary dove tail shapes.

The present invention also provides a method of coupling an insert member with a disc, the disc comprising a generally annular member having a central opening, a pair of surfaces defining a disc thickness between an outer axial surface and an inner axial surface at the central opening, and at least one radially extending opening located in one of the axial surfaces, the radially extending opening including at least one face extending radially to a surface located at an end of the radially extending opening, the at least one face having
at least one of an open area or a projection with an axial width less than the disc thickness to be disposed completely internally within the disc thickness, and a carbon-carbon composite insert member including at least the other of the open area and the projection, the projection shaped complementary to the open area, comprising:
aligning at least one of the projection or the open area with the other; and
moving at least one of the projection or the open area so that surfaces of the open area encompass the projection and the insert member is positioned adjacent the at least one face, whereby the reception of the projection by the open area maintains the insert member in the radially extending opening of the disc, wherein after insertion of the insert member, the outer axial surface in which the radially extending opening is formed remains substantially exposed and a width of the insert member is substantially equal to a width of the disc.

The projection and the surfaces of the open area may be maintained in engagement by an interference fit therebetween.

The method may further include applying an adhesive material to at least one of the projection or the open area.

The insert member may further comprise an anti-oxidant composition to minimize oxidation thereof.

The method may further comprise applying the anti-oxidant composition by pressure impregnation.

In the Drawings:
FIG. 1 is a cut-away perspective illustration of a known example aircraft brake having a brake disc assembly with carbon-carbon composite brake discs.
FIG. 2 is a partial perspective view of as example carbon-carbon composite rotor disc having composite insert members.
FIG. 3 is a perspective view of the example composite insert member of FIG. 2.
FIG. 4 is a partial perspective view of another example carbon-carbon composite rotor disc having composite insert members.
FIG. 5 is a perspective view of the example composite insert member of FIG. 4.

FIG. 6 is a representative flow diagram of an example method to couple a composite insert member with a carbon-carbon composite brake disc.

In general, the example method and brake disc with composite insert member described herein may be applied to brake discs that are manufactured from various materials and by various manufacturing methods-Additionally, while the examples described herein are described in connection with aircraft applications in the aerospace industry, the examples described herein maybe more general applicable, to a variety of braking applications in different industries.

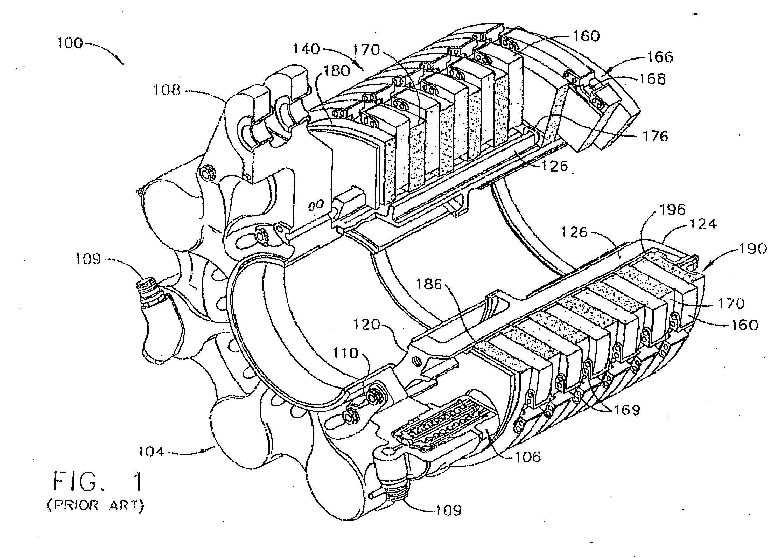

FIG. 1 is a cut-away view of a typical aircraft brake 100 and, in particular, a brake having friction material components made of carbon-carbon composite material, The aircraft brake 100 includes a piston housing 104 having a plurality of hydraulic pistons 106 located about the circumference of the piston housing 104, hydraulic fittings 109 for communication with a hydraulic brake actuation system (not shown) of an aircraft (not shown), a torque take-out arm 108 for attachment to the landing gear (not shown) of the aircraft, and a plurality of circumferentially spaced-apart bolts 110 attaching the piston housing 104 to a torque tube 120.

Torque tube 120 includes axially-extending splines 126 and extends horizontally from the piston housing 104 to a backing plate 124. Located about the torque tube 120 and between the pistons 106 and the backing plate 124, are a plurality of friction material discs constituting the heat stack or brake disc assembly 140 of the aircraft brake 100. The friction material discs of the brake disc assembly 140 include six rotor discs 160, five stator discs 170, a pressure plate disc 180, and a backing plate disc 190.

As is well known in the aircraft wheel and brake industry, the rotor discs 160 include a plurality of spaced-apart slots 166 in their outer circumference. The spaced-apart slots 166 each include therein a metal insert 168. The spaced-apart slots 166 and the metal inserts 168 receive drive keys (not shown) either attached to or made an integral part of the aircraft wheel (not shown) at a wheel well opening so that the rotor discs 160 are connected non-rotatably with the wheel. The stator discs 170 include at their inner diameter a plurality of spaced-apart slots 176, the pressure plate disc 180 includes at its inner diameter a plurality spaced-apart slots 186, and the backing plate disc 190 includes at its inner diameter a plurality of spaced-apart slots 196. The spaced-apart slots 176, 186, and 196 receive the splines 126 of the torque tube 120 so that the stator discs 170, the pressure plate disc 180 and the backing plate disc 190 are attached non-rotatably to the torque tube 120. In a similar manner, the spaced-apart slots 176, 186, and 196 may each include a metal insert (not shown), which provides a metal-to-metal interface between the metal insert and a spline 126, Metal annular drive inserts for stator discs, pressure plate discs, and/or backing plate discs have been marketed by the assignee of this patent application, Honeywell International Inc. (formerly AlliedSignal Inc.)

In operation, the aircraft brake 100 (the assembled piston housing 104, the torque tube 120, and the brake disc assembly 140) is mounted to an axle (not shown) of an aircraft landing gear (not shown), the torque take-out arm 108 is connected to the landing gear, and the piston housing 104 is connected via the fittings 109 to the hydraulic brake actuation system (not shown) of the aircraft. When an aircraft operator actuates a brake pedal of the aircraft or when the brakes are operated automatically by the aircraft's hydraulic brake actuation system, hydraulic brake fluid is pressurized to cause the hydraulic pistons 106 to extend from the piston housing 104 and squeeze together the spinning rotor discs 160 and the stationary stator discs 170 between the stationary pressure plate disc 180 and the stationary backing plate disc 190, thereby causing the spinning rotor discs 160 and attached wheel to decelerate and slow down the aircraft until it is brought to a stop. Persons of ordinary skill understand that the illustrated aircraft brake 100 can also be an electric aircraft brake that utilizes electromechanical actuators instead of the hydraulic pistons 106 and an electrical actuation system instead of the hydraulic brake actuation system, as is well known within the aircraft industry.

In the illustrated aircraft brake 100 of FIG. 1, the pressure plate disc 180, the rotor discs 160, the stator discs 170, and the backing plate disc 190 of the brake disc assembly 140 are made of carbon-carbon composite material. The rotor discs 160 have the metal inserts 168 located in the spaced-apart slots 166. Each metal insert 168 is attached to a rotor disc 160 via at least two rivets 169. The metal inserts 168 and the rivets 169 add to the overall weight of the rotor disc 160. Additionally, the inserts 168 and the rivets 169 are manufactured or procured as individual parts whose costs contribute to the cost of manufacturing the rotor disc 160. To attach the metal inserts 168 to the rotor discs 160, holes (not shown) are drilled adjacent the spaced-apart slots 166 in the rotor disc 160, each metal insert 168 then positioned in a slot 166, the rivets 169 inserted through openings (not shown) in the metal inserts 168 and the holes in the rotor disc 160, which are aligned with the openings in the metal insert 168, and at least one end of each rivet 169 is swaged or formed to secure the rivet 169 to the respective metal insert 168 and, thus, secure the metal insert 168 within the slot 166. The attachment of the metal inserts 168 to the rotor discs 160 via the rivets 169 increases the time required to assemble the rotor discs 160. Thus, the use of the metal inserts 168 and the rivets 169, and the time required to attach the metal inserts 168 via the rivets 169 to the rotors discs 160, results in an increase in the overall cost of manufacturing the rotor discs 160. Therefore, it is highly desirable that carbon-carbon composite brake discs such as, for example, the rotors 160, be provided with inserts that are lightweight, require less assembly time, and reduce the cost of the brake discs.

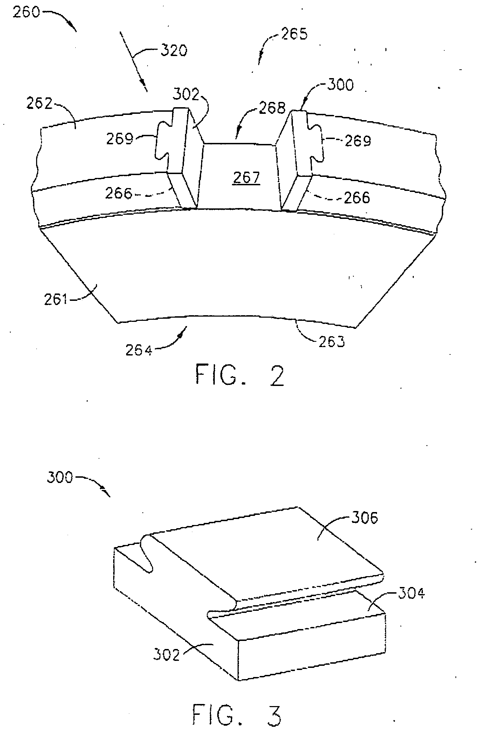

FIG. 2 illustrates a partial perspective view of an example carbon-carbon composite rotor disc 260 having composite insert members 300. In the partial perspective view of FIG. 2, the carbon-carbcs composite rotor disc 260 includes a pair of generally parallel surfaces 261 (only one surface 261 is illustrated) extending between an outer axial surface 262 and an inner axial surface 263 at a central opening 264. The outer axial surface 262 extends over the width or thickness of the disc 260 and includes a plurality of radially extending openings or circumferentially spaced-apart drive slots 265 (only one is illustrated) each including a pair of oppositely disposed faces 266 extending radially to an axial surface 267 located at an end 268 of the drive slot 265, The faces 266 of the drive slot 265 each include therein an open area 269 having a dove tail shape with a width less than the width or thickness of the disc 260 whereby the open area 269 is disposed completely internally within the thickness of the disc 260. The open area 269 extends circumferentially relative to the disc 260.

As can be seen in FIG. 2, the pair of oppositely disposed faces 266 of the drive slot 265 each have a composite insert member 300 located adjacent thereto. The example composite insert member 300 illustrated in FIG. 2 is made of carbon-carbon composite material such as, for example, a nonwoven carbon-carbon composite material named CARBENIX® 4000 manufactured by the assignee of this patent application, Honeywell International Inc. The composite insert member 300 includes a face portion 302 substantially covering the adjacent face 266 of the drive slot 265. As can be seen in FIG. 3, the face portion 302 extends to a rear surface 304 from which extends a dove tail-shaped projection 306. In FIG. 2, the projection 306 of each composite insert member 300 extends circumferentially relative to the rotor disc 260 and is received within a respective open area 269. The projection 306 is similar to the open area 269 by having a width less than the width or thickness of the disc 260 so that the projection 306 is encompassed by the surfaces of the open area 269 and disposed completely internally within the width or thickness of the disc 260. The projection 306 and the open area 269 are both disposed completely internally within the thickness of the disc 260. As can be readily seen in FIG. 2, the use of the complementarily shaped projection 306 and the open area 269 each having a width less than the width or thickness of the disc 260 achieves a strengthening of the engagement of the disc 260 with the insert member 300, because opposite sides of the projection 306 are engaged by the surfaces of the open area 269 in the disc 260, and this also enables an interference fit of the projection 306 with the open area 269 as disclosed below.

The projection 306 is received in the open area 269 by moving the insert member 300 in the radially inward direction of arrow 320 in FIG. 2 so that the projection 306 slides into the open area 269. The reception of the dove tail-shaped projection 306 by the dove tail-shaped open area 269 secures the composite drive insert 300 to the face 266 of the drive slot 265. The dove tail-shaped projection 306 can be retained in the dove tail-shaped open area 269 by various technique such as, for example, either an interference fit achieved by making the open area 269 slightly smaller than the projection 306, or by using a carbonizable thermoset adhesive such as an epoxy novolac, or a combination thereof. It should be clearly understood that the dove tail shapes of the open area 269 and the projection 306 are but one example of complementary shapes that may be utilized by the example rotor disc 260 and the composite insert member 300. It is contemplated that other shapes such as, for example, round, square, rectangular, oval, irregular, etc. can be utilized to achieve an engagement between the composite insert member 300 and the rotor disc 260. The projection of a composite member can be received in a complementarily-shaped opening in a disc by movement in any of radial, axial, circumferential, or tangential directions, or combinations thereof, relative to the disc. Also, the spaced-apart slots of a stator disc, a pressure plate disc, or a backing plate disc (i.e,, the slots 176 of the stator disc 170, the slots 186 of the pressure plate disc 180, or the slots 196 of the backing plate disc 190, in FIG. 1) may include the example composite insert members 300 to provide interfaces with the splines of a torque tube (i.e., the splines 126 of the torque tube 120 in FIG. 1). And as disclosed below, a projection can extend from a face of a drive slot and an open area can be in a composite insert member.

The example composite insert member 300 is made of a carbon-carbon composite material that may be protected from catalytic oxidation by an anti-oxidant composition. Any of a number of anti-oxidant compositions may be utilized such as, for example, a composition named PK-13 comprising a phosphoric acid penetrant marketed by Honeywell International Inc. Either a part of or all of the surface area of the composite insert member 300 can be treated by applying the anti-oxidant composition and curing the composition so that it dries and adheres to the surface area. The application of the anti-oxidant composition to the entire composite insert member 300 is an advantage derived from utilizing a composite insert member as a lead bearing carbon-carbon composite member. Additionally, pressure impregnation of the composite insert member 300 with the anti-oxidant composition may be utilized to increase significantly the pickup of the anti-oxidant composition and, thereby, increase oxidation resistance.

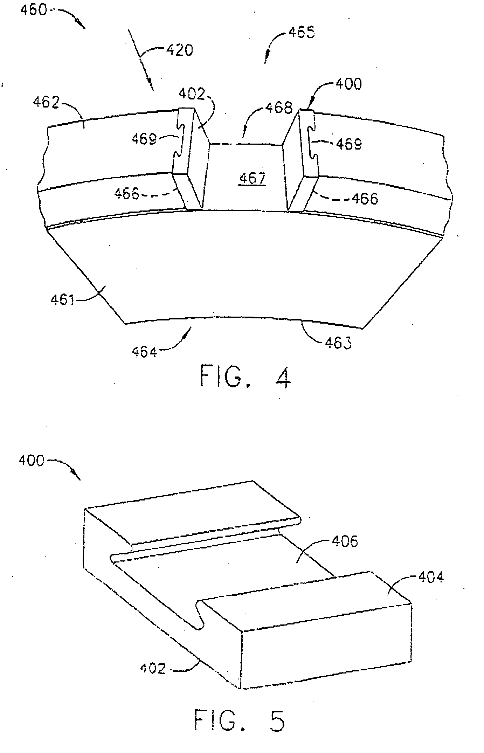

FIG. 4 is a partial perspective view of another example carbon-carbon composite rotor disc 460 having composite insert members 400. In the partial perspective view of FIG. 4, the carbon-carbon composite rotor disc 460 includes a pair of generally parallel surfaces 461 (only one surface 461 illustrated) extending between an outer axial surface 462 and an inner axial surface 463 at a central opening 464. The outer axial surface 462 extends over the width or thickness of the disc 460 and includes a plurality of radially extending openings or circumferentially spaced-apart drive slots 465 (only one is illustrated) each including a pair of oppositely disposed faces 466 extending radially to an axial surface 467 located at an end 468 of the drive slot 465.
The faces 466 of the drive slot 465 each include a projection 469 having a dove tail shape with a width less than the width or thickness of the disc 460 whereby the projection 469 is disposed completely internally within the width or thickness of the disc 460.

As can be seen in FIG. 4, the pair of oppositely disposed faces 466 of the drive slot 465 each have a composite insert member 400 located adjacent thereto. The example composite insert member 400 illustrated in FIG. 4 is made of carbon-carbon composite material such as, for example, the nonwoven carbon-carbon composite material named CARBENIX® 4000. The composite insert member 400 includes a face portion 402 substantially covering the adjacent face 466 of the drive slot 465. As can be seen in FIG. 5, the face portion 402 extends to a rear surface 404 which includes a dove tail-shaped open area 406. In FIG. 4, the projection 469 of each face 466 extends circumferentially relative to the rotor disc 460 and is received within and encompassed by the surfaces of the respective open area 406 of the composite insert, member 400. The open area 406 and the projection 469 each have a width less than the width or thickness of the disc 460 and are disposed completely internally within the width or thickness of the disc 460 to provide, as disclosed previously, the strengthening of the engagement of the disc 460 with the insert member 400 and also enabling an interference fit between the disc 460 and the insert member 400.

The projection 469 is received in the open area 406 by moving the composite insert member 400 in the radially inward direction of arrow 420 in FIG. 4 so that the open area 406 slides over or upon the projection 469. The reception of the dove tail-shaped projection 469 by the dove tail-shaped open area 406 secures the composite insert member 400 to the face 466 of the drive slot 465. As previously disclosed for the composite insert member 300 in FIG. 2, the dove tail-shaped projection 469 in FIG. 4 can be maintained in the dove tail-shaped open area 406 by various techniques such as, for example, either an interference fit achieved by making the open area 406 slightly smaller than the projection 469, or by using a carbonizable thermoset adhesive such as an epoxy novolac, or a combination thereof. As disclosed previously, the composite insert member 400 can be protected from catalytic oxidation by an anti-oxidant composition such as PK-13, and the anti-oxidant composition can be applied by pressure impregnation to accomplish the disclosed advantages of utilizing a composite insert member as the load bearing carbon-carbon composite member.

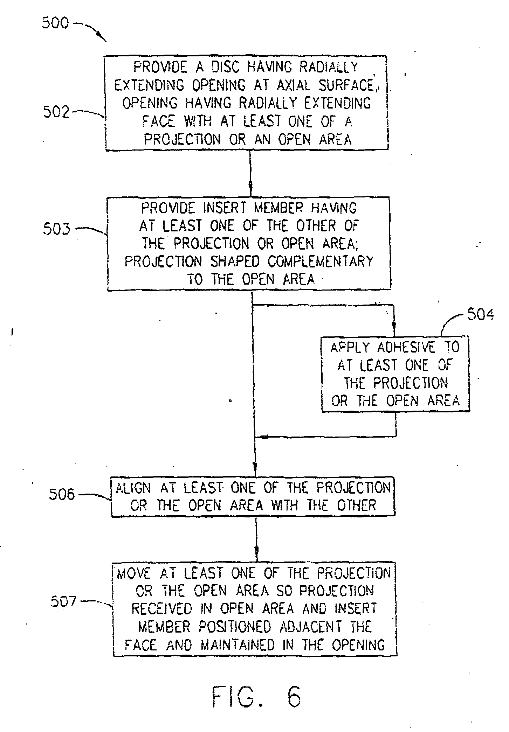

FIG. 6 is a representative flow diagram of an example method 500 to couple a composite insert member with a carbon-carbon composite brake disc and, more particularly, to couple a carbon-carbon composite insert member with a carbon-carbon composite brake disc to provide an interface for the brake disc. Initially, a disc (e.g., the disc 260 in FIG. 2 or the disc 460 in FIG. 4) is provided, which includes a radially extending opening (e.g., the drive slot 265 in FIG. 2 or the drive slot 465 in FIG. 4) at an axial surface (e.g., the axial surface 262 in FIG. 2 or the axial surface 465 in FIG. 4), the opening having a radially extending face (e.g., the face 266 in FIG. 2 or the face 466 in FIG. 4) with at least one of a projection (e.g., the projection 469 in FIG. 4) or an open area (e.g., the open area 269 in FIG, 2), as illustrated by block 502. An insert member (e.g., the composite insert member 300 in FIGS. 2-3 or the composite insert member 400 in FIGS. 4-5) is provided and has at least the other of the projection (e.g., the projection 306 in FIG. 3) or the open area (e.g., the open area 406 in FIG. 5), the projection shaped complementary to the open area, as illustrated in block 503. If desired, an adhesive may be applied to at least one of the projection or open area (block 504). Next, at least one of the projection or the open area is aligned with the other (block 506). Finally, at least one of the projection or the open area is moved so the open area receives the projection and the insert member positioned adjacent the at least one face and maintained in the radially extending opening (block 507).

An example method and disc with insert member are described with reference to the flow diagram illustrated in FIG. 6. However, persons of ordinary skill in the art will readily appreciate that other methods of implementing the example method may alternatively be used. For example, the order of execution of the blocks may be changed, and/or some of the blocks described may be changed, eliminated, or combined.

The example method 500 and the example composite insert members 300 and 400 disclosed in FIGS. 2 - 6 provide advantages over metal insert members such as, for example, the metal inserts 168 illustrated in FIG.
1. The example composite insert members 300 and 400 can made of a nonwoven material such as, for example CARBENIX® 4000, which has high compressive and shear strength and weighs significantly less than a metal insert. Coupling the composite insert members 300 and 400 with the carbon-carbon composite discs (e.g., the rotor disc 260 in FIG. 2 or the rotor disc 460 in FIG.4) does not require that holes be drilled into the discs to receive rivets (e.g., the rivets 169 in FIG. 1) that typically secure a metal insert member to the disc. The composite insert members 300 and/or 400 can be coupled easily with a disc to reduce the manufacturing and assembly time, and thus the cost, of a disc, Additionally, the use of metal inserts and rivets is eliminated, thereby reducing the amount of weight added to the disc. Due to the elimination of the rivet holes, the mass of each disc is increased, and, thus, the overall mass of the brake disc assembly is increased to increase the amount of braking energy that can be absorbed by the brake disc assembly,

## Claims

1. A disc (260, 460) for a friction mechanism, the disc (260, 460) comprising a generally annular member having a central opening (264,464), a pair of generally parallel surfaces (261, 461) defining a disc thickness extending radially between an outer axial surface (262, 462) and an inner axial surface (263, 463) at the central opening (264, 464), and at least one radially extending opening (265, 465) located in one of the axial surfaces (262, 263; 462, 463), the radially extending opening (265, 465) including a pair of oppositely disposed faces (266, 466) extending radially to a surface (267, 467) located at an end (268,468) of the radially extending opening (265, 465), each face (266,466) having therein at least one of an open area (269, 406) or a projection (306, 469) extending circumferentially relative to the disc (260, 460) and with an axial width less than the disc thickness to be disposed completely internally within the disc thickness, and a carbon-carbon composite insert member (300, 400) adjacent a respective face (266, 466), the insert member (300, 400) comprising a portion (302, 402) shaped substantially similar to the face (266, 466) and having at least the other of the open area (269, 406) and the projection (306, 469), the projection (306, 469) encompassed by surfaces of the open area (269, 406), wherein after insertion of the insert member (300, 400), the outer axial surface (262, 462) in which the radially extending opening (265, 465) is formed remains substantially exposed and a width of the insert member (300, 400) is substantially equal to a width of the disc (260, 460).

2. A disc as claimed in claim 1, wherein each face (266, 466) extends axially between the generally parallel surfaces (261, 461 and has a thickness equal to the disc thickness.

3. A disc as claimed in claim 2, wherein the open area (269) is in each face (266) of the opening (265) and the projection (306) is part of the insert member (300).

4. A disc as claimed in claim 1, wherein the projection (306,469) extends between the outer axial surface (262,462) and the surface (267, 467) at the end of the radially extending opening (265, 465).

5. A disc as claimed in claim 1, wherein the projection (306, 469) and open area (269, 406) have complementary dove tail shapes.

6. A method (500) of coupling an insert member (300, 400) with a disc (260, 460), the disc (260, 460) comprising a generally annular member having a central opening (264, 464), a pair of surfaces (261, 461) defining a disc thickness between an outer axial surface (262, 462) and an inner axial surface (263,463) at the central opening (264,464), and at least one radially extending opening (265, 465) located in one of the axial surfaces (262,462; 263, 463), the radially extending opening (265, 465) including at least one face (266, 466) extending radially to a surface (267, 467) located at an end (268,468) of the radially extending opening (265,465), the at least one face (266, 466) having at least one of an open area (269, 406) or a projection (306, 469) with an axial width less than the disc thickness to be disposed completely internally within the disc thickness, and a carbon-carbon composite insert member (300,400) including at least the other of the open area (269, 406) and the projection (306, 469), the projection (306, 469) shaped complementary to the open area (269, 406), comprising:
aligning (506) at least one of the projection (306,469) or the open area (269, 406) with the other; and
moving (507) at least one of the projection (306, 469) or the open area (269,406) so that surfaces of the open area (269,406) encompass the projection (306,469) and the insert member (300, 400) is positioned adjacent the at least one face (266, 466), whereby the reception of the projection (306, 469) by the open area (269, 406) maintains the insert member (300, 400) in the radially extending opening (265, 465) of the disc (260,460), wherein after insertion of the insert member (300, 400), the outer axial surface (262, 462) in which the radially extending opening (265, 465) is formed remains substantially exposed and a
width of the insert member (300, 400) is substantially equal to a width of the disc (260, 460).

7. Method as claimed in claim 6, wherein the projection (306, 469) and the surfaces of the open area (269, 406) are maintained in engagement by an interference fit therebetween.

8. Method as claimed in claim 6, further including applying an adhesive material to at least one of the projection (306, 469) or the open area (269, 406).

9. Method as claimed in claim 6, wherein the insert member (300, 400) further comprises an anti-oxidant composition to minimize oxidation thereof.

10. Method as claimed in claim 9, further comprising applying the anti-oxidant composition by pressure impregnation.

## Patentansprüche

1. Scheibe (260, 460) für einen Reibmechanismus, wobei die Scheibe (260, 460) ein im Allgemeinen ringförmiges Element mit einer mittigen Öffnung (264, 464) einem Paar im Allgemeinen paralleler Oberflächen (261, 461), die eine Scheibendicke definieren und sich zwischen einer äußeren axialen Oberfläche (262, 462) und einer inneren axialen Oberfläche (263, 463) bei der mittigen Öffnung (264, 464) radial erstrecken, und wenigstens einer radial verlaufenden Öffnung (265, 465), die sich in einer der axialen Oberflächen (262, 263; 462, 463) befindet, wobei die radial verlaufende Öffnung (265, 465) ein Paar einander gegenüber angeordneter Flächen (266, 466) aufweist, die sich radial zu einer Oberfläche (267, 467) erstrecken, die sich an einem Ende (268, 468) der radial verlaufenden Öffnung (265, 465) befindet, wobei in jeder Fläche (266, 466) ein offener Bereich (269, 406) und/oder ein Vorsprung (306, 469) vorhanden ist, der sich in Umfangsrichtung relativ zu der Scheibe (260, 460) erstreckt und eine axiale Breite besitzt, die kleiner als die Scheibendicke ist, um vollständig innerhalb der Scheibendicke angeordnet zu sein, und angrenzend an eine entsprechende solche Fläche (266, 466) ein Kohlenstoff/Kohlenstoff-Verbund-Einsatzelement (300, 400) enthält, wobei das Einsatzelement (300, 400) einen Abschnitt (302, 402) aufweist, der im Wesentlichen ähnlich wie die Fläche (266, 466) geformt ist und wenigstens den Anderen des offenen Bereichs (269, 406) und des Vorsprungs (306, 469) besitzt, wobei der Vorsprung (306, 469) von Oberflächen des offenen Bereichs (269, 406) umgeben ist, wobei nach dem Einsetzen des Einsatzelements (300, 400) die äußere axiale Oberfläche (262, 462), in der die radial verlaufende Öffnung (265, 465) ausgebildet ist, im Wesentlichen frei liegend bleibt und eine Breite des Einsatzelements (300, 400) im Wesentlichen gleich einer Breite der Scheibe (260, 460) ist.

2. Scheibe nach Anspruch 1, wobei sich jede Fläche (266, 466) zwischen den im Allgemeinen parallelen Oberflächen (261, 461) axial erstreckt und eine Dicke besitzt, die gleich der Scheibendicke ist.

3. Scheibe nach Anspruch 2, wobei sich in jeder Fläche (266) der Öffnung (265) der offene Bereich (269) befindet und der Vorsprung (306) ein Teil des Einsatzelements (300) ist.

4. Scheibe nach Anspruch 1, wobei sich der Vorsprung (306, 469) zwischen der äußeren axialen Oberfläche (262, 462) und der Oberfläche (267, 467) am Ende der radial verlaufenden Öffnung (265, 465) erstreckt.

5. Scheibe nach Anspruch 1, wobei der Vorsprung (306, 469) und der offene Bereich (269, 406) komplementäre Schwalbenschwanzformen haben.

6. Verfahren (500) zum Koppeln eines Einsatzelements (300, 400) mit einer Scheibe (260, 460), wobei die Scheibe (260, 460) ein im Allgemeinen ringförmiges Element mit einer mittigen Öffnung (264, 464), einem Paar Oberflächen (261, 461), die zwischen einer äußeren axialen Oberfläche (262, 462) und einer inneren axialen Oberfläche (263, 463) bei der mittigen Öffnung (264, 464) eine Scheibendicke definieren, und wenigstens einer radial verlaufenden Öffnung (265, 465), die sich in einer der axialen Oberflächen (262, 462; 263, 463) befindet, wobei die radial verlaufende Öffnung (265, 465) wenigstens eine Fläche (266, 466) aufweist, die sich radial zu einer Oberfläche (267, 467) erstreckt, die sich an einem Ende (268, 468) der radial verlaufenden Öffnung (265, 465) befindet, wobei die wenigstens eine Fläche (266, 466) einen offenen Bereich (269, 406) und/oder einen Vorsprung (306, 469) mit einer axialen Breite, die geringer als die Scheibendicke ist, um vollständig innerhalb der Scheibendicke angeordnet zu sein, besitzt, und ein Kohlenstoff/Kohlenstoff-Verbund-Einsatzelement (300, 400), das wenigstens den Anderen des offenen Bereichs (269, 406) und des Vorsprungs (306, 469) enthält, wobei der Vorsprung (306, 469) komplementär zu dem offenen Bereich (269, 406) geformt ist, wobei das Verfahren enthält:
Ausrichten (506) des Vorsprungs (306, 469) und/oder des offen Bereichs (269, 406) aufeinander; und
Bewegen (507) des Vorsprungs (306, 469) und/oder des offenen Bereichs (269, 406), so dass die Oberflächen des offenen Bereichs (269, 406) den Vorsprung (306, 469) umgeben und das Einsatzelement (300, 400) angrenzend an die wenigstens eine Fläche (266, 466) positioniert ist, wobei die Aufnahme des Vorsprungs (306, 469) durch den offenen Bereich (269, 406) das Einsatzelement (300, 400) in der radial verlaufenden Öffnung (265, 465) der Scheibe (260, 460) hält, wobei nach dem Einsetzen des Einsatzelements (300, 400) die äußere axiale Oberfläche (262, 462), in der die radial verlaufende Öffnung (265, 465) ausgebildet ist, im Wesentlichen freiliegend bleibt und eine Breite des Einsatzelements (300, 400) im Wesentlichen gleich einer Breite der Scheibe (260, 460) ist.

7. Verfahren nach Anspruch 6, wobei der Vorsprung (306, 469) und die Oberflächen des offenen Bereichs (269, 406) durch eine Grenzflächenpassung zwischen ihnen in Eingriff gehalten werden.

8. Verfahren nach Anspruch 6, das ferner das Aufbringen eines Klebstoffmaterials auf den Vorsprung (306, 469) und/oder den offenen Bereich (269, 406) enthält.

9. Verfahren nach Anspruch 6, wobei das Einsatzelement (300, 400) ferner eine Antioxidationszusammensetzung enthält, um seine Oxidation minimal zu machen.

10. Verfahren nach Anspruch 9, das ferner das Aufbringen der Antioxidationszusammensetzung durch Druckimprägnierung enthält.

## Revendications

1. Disque (260, 460) pour un mécanisme de frottement, le disque (260, 460) comprenant un élément essentiellement annulaire présentant une ouverture centrale (264, 464), une paire de surfaces essentiellement parallèles (261, 461) qui définissent une épaisseur de disque s'étendant radialement entre une surface axiale extérieure (262, 462) et une surface axiale intérieure (263, 463) à l'ouverture centrale (264, 464), et au moins une ouverture s'étendant radialement (265, 465) formée dans l'une des surfaces axiales (262, 263; 462, 463), l'ouverture s'étendant radialement (265, 465) comprenant une paire de faces disposées en opposition (266, 466) qui s'étendent radialement par rapport à une surface (267, 467) qui est située à une extrémité (268, 468) de l'ouverture s'étendant radialement (265, 465), chaque face (266, 466) intégrant au moins une région ouverte (269, 406) ou une saillie (306, 469) qui s'étend de façon circonférentielle par rapport au disque (260, 460) et présentant une largeur axiale inférieure à l'épaisseur du disque à disposer de façon intégralement interne à l'intérieur de l'épaisseur du disque, et un élément d'insertion composite carbone - carbone (300, 400) situé à proximité d'une face respective (266, 466), l'élément d'insertion (300, 400) comprenant une partie (302, 402) dont la forme est sensiblement similaire à celle de la face (266, 466) et qui présente au moins l'autre de la région ouverte (269, 406) et de la saillie (306, 469), la saillie (306, 469) étant enveloppée par des surfaces de la région ouverte (269, 406), dans lequel, après l'insertion de l'élément d'insertion (300, 400), la surface axiale extérieure (262, 462) dans laquelle l'ouverture s'étendant radialement (265, 465) est formée reste essentiellement exposée, et une largeur de l'élément d'insertion (300, 400) est sensiblement égale à une largeur du disque (260, 460).

2. Disque selon la revendication 1, dans lequel chaque face (266, 466) s'étend axialement entre les surfaces essentiellement parallèles (261, 461) et présente une épaisseur qui est égale à l'épaisseur du disque.

3. Disque selon la revendication 2, dans lequel la région ouverte (269) est formée dans chaque face (266) de l'ouverture (265) et la saillie (306) fait partie de l'élément d'insertion (300).

4. Disque selon la revendication 1, dans lequel la saillie (306, 469) s'étend entre la surface axiale extérieure (262, 462) et la surface (267, 467) à l'extrémité de l'ouverture s'étendant radialement (265, 465).

5. Disque selon la revendication 1, dans lequel la saillie (306, 469) et la région ouverte (269, 406) présentent des formes de queue d'aronde complémentaires.

6. Procédé (500) pour coupler un élément d'insertion (300, 400) avec un disque (260, 460), le disque (260, 460) comprenant un élément essentiellement annulaire présentant une ouverture centrale (264, 464), une paire de surfaces (261, 461) qui définissent une épaisseur de disque entre une surface axiale extérieure (262, 462) et une surface axiale intérieure (263, 463) à l'ouverture centrale (264, 464), et au moins une ouverture s'étendant radialement (265, 465) formée dans l'une des surfaces axiales (262, 462; 263, 463), l'ouverture s'étendant radialement (265, 465) comprenant au moins une face (266, 466) qui s'étend radialement par rapport à une surface (267, 467) qui est située à une extrémité (268, 468) de l'ouverture s'étendant radialement (265, 465), ladite au moins une face (266, 466) intégrant au moins une région ouverte (269, 406) ou une saillie (306, 469) présentant une largeur axiale qui est inférieure à l'épaisseur du disque à disposer de façon intégralement interne à l'intérieur de l'épaisseur du disque, et un élément d'insertion composite carbone - carbone (300, 400) comprenant au moins l'autre de la région ouverte (269, 406) et de la saillie (306, 469), la saillie (306, 469) ayant une forme complémentaire à celle de la région ouverte (269, 406), comprenant les étapes consistant à:
aligner (506) au moins une de la saillie (306, 469) ou de la région ouverte (269, 406) avec l'autre; et
déplacer (507) au moins une de la saillie (306, 469) ou de la région ouverte (269, 406) de telle sorte que les surfaces de la région ouverte (269, 406) enveloppent la saillie (306, 469) et que l'élément d'insertion (300, 400) soit positionné à proximité de ladite au moins une face (266, 466), dans lequel la réception de la saillie (306, 469) par la région ouverte (269, 406) maintient l'élément d'insertion (300, 400) dans l'ouverture s'étendant radialement (265, 465) du disque (260, 460), dans lequel, après l'insertion de l'élément d'insertion (300, 400), la surface axiale extérieure (262, 462) dans laquelle l'ouverture s'étendant radialement (265, 465) est formée reste essentiellement exposée, et une largeur de l'élément d'insertion (300, 400) est sensiblement égale à une largeur du disque (260, 460).

7. Procédé selon la revendication 6, dans lequel la saillie (306, 469) et les surfaces de la région ouverte (269, 406) sont maintenues en engagement par un ajustement serré entre elles.

8. Procédé selon la revendication 6, comprenant en outre l'application d'une matière adhésive sur au moins soit la saillie (306, 469), soit la région ouverte (269, 406).

9. Procédé selon la revendication 6, dans lequel l'élément d'insertion (300, 400) comprend en outre une composition anti-oxydante pour minimiser l'oxydation de celui-ci.

10. Procédé selon la revendication 9, comprenant en outre l'application de la composition anti-oxydante par imprégnation sous pression.
